# EUROPÄISCHE PATENTANMELDUNG

(11) **EP 3 290 745 A1**
(43) Veröffentlichungstag der Anmeldung: **07.03.2018**
(21) Anmeldenummer: 16186819.5
(22) Anmeldetag: 01.09.2016
(51) Int. Cl.: F16H 1/02

(54) **ABTRIEB FÜR GETRIEBE, PLANETENGETRIEBE UND WINDKRAFTANLAGE**

(71) Anmelder: Flender GmbH, 46395 Bocholt (DE)
(72) Erfinder: Lehner, Reinhold, 47051 Duisburg (DE); Tebroke, Jörg, 46414 Rhede (DE)
(74) Vertreter: Maier, Daniel Oliver

(57) **Zusammenfassung**

Die Erfindung betrifft einen Abtrieb (20) für ein Planetengetriebe (10), umfassend eine Abtriebswelle (12) des Planetengetriebes (10). Die Abtriebswelle (20) ist zumindest teilweise in einer Hohlwelle (22) aufgenommen, und die Hohlwelle (22) ist drehfest mit einem Stirnrad (30) verbunden. Erfindungsgemäß umfasst die Hohlwelle (22) einen ersten und einen separaten zweiten Hohlwellenabschnitt (42, 44), die auf jeweils unterschiedlichen Seiten (33, 34) des Stirnrads (30) angeordnet sind. Die Erfindung betrifft auch ein Planetengetriebe (10) das mit einem entsprechenden Abtrieb (20) ausgestattet ist und eine Windkraftanlage, die über ein solches Planetengetriebe (10) verfügt.

## Beschreibung

Die Erfindung betrifft einen Abtrieb für ein Getriebe, über den die Wellenleistung vom Getriebe einer Anwendung zugeführt wird. Die Erfindung betrifft auch ein Planetengetriebe, das mit einem entsprechenden Abtrieb gekoppelt ist. Des Weiteren betrifft die Erfindung eine Windkraftanlage, die mit einem derartigen Planetengetriebe ausgestattet ist.

Aus DE 10 2013 201 074 A1 ist eine Hohlwelle mit einem zweiteiligen Zahnrad bekannt, die in einer Windkraftanlage eingesetzt wird. Die Hohlwelle ist an ihrer Innenseite mit einer Innenverzahnung versehen, die in eine Außenverzahnung einer Sonnenradwelle eingreift. Die Sonnenradwelle ist dabei in dr Hohlwelle aufgenommen. Durch die ineinandergreifenden Verzahnungen erfolgt eine Drehmomentübertragung auf die Hohlwelle. Die Hohlwelle ist einstückig mit einem Radkörper ausgebildet, der als Montagebasis für einen äußeren Zahnring dient. Der Zahnring wird beispielsweise durch Aufschrumpfen drehfest mit dem Radkörper verbunden.

Die Offenlegungsschrift DE 10 2009 017 301 A1 offenbart ein Zahnradgetriebe, das in einer Windkraftanlage eingesetzt wird. Das Zahnradgetriebe umfasst eine durchgehende Hohlwelle, die einen radialen Stufenabsatz aufweist. Auf dem Stufenabsatz ist ringförmig ein Zahnrad aus einem Einsatzstahl angebracht, das über eine Welle-Nabe-Verbindung mit der Hohlwelle verbunden ist.

Aus DE 10 2009 040 349 A1 ist ein Windkraftanlagengetriebe bekannt, das eine Hohlwelle umfasst, die drehfest mit einem Stirnrad verbunden ist. Über das Stirnrad wird die von der Hohlwelle transportierte Wellenleistung über weitere Zahnräder an eine Abtriebswelle weitergeleitet. Das Stirnrad ist mit der Hohlwelle über einen Kegelpressverband verbunden.

Ein Nachteil der bekannten Abtriebe besteht darin, dass diese bei der Herstellung einen hohen Aufwand in puncto Material und Fertigungsaufwand erfordern. Des Weiteren erfordern die bekannten Lösungen einen erhöhten Montageaufwand. Es besteht Bedarf an einem verbesserten Abtrieb für ein Getriebe, der die Nachteile aus dem Stand der Technik überwindet und gleichzeitig ein hohes Maß an mechanischer Leistungsfähigkeit und Lebensdauer bietet. Ebenso besteht Bedarf an einem zugehörigen Planetengetriebe und einer entsprechend verbesserten Windkraftanlage.

Die skizzierte Aufgabenstellung wird durch den erfindungsgemäßen Abtrieb gelöst, der mit einem Getriebe koppelbar ist. Der Abtrieb umfasst eine drehbar gelagerte Abtriebswelle des Getriebes, über die die vom Getriebe abgegebene Wellenleistung transportiert wird und die dem erfindungsgemäßen Abtrieb als Eingangswelle dient. Das Getriebe ist dabei als Stirnradgetriebe oder als Planetengetriebe ausgebildet. Die Abtriebswelle ist zumindest teilweise in einer Hohlwelle aufgenommen, über die ein Stirnrad drehbar gelagert ist. Das Stirnrad ist drehfest mit der Hohlwelle verbunden und dazu ausgebildet, die von der Abtriebswelle transportierte Wellenleistung aufzunehmen und an eine Anwendung außerhalb des Abtriebs weiterzuleiten. Erfindungsgemäß ist die Hohlwelle in Differentialbauweise ausgebildet und weist einen ersten und davon separaten zweiten Hohlwellenabschnitt auf, die auf ihrer gemeinsamen Drehachse hintereinander angeordnet sind. Das Stirnrad ist auch auf der Drehachse der Hohlwellenabschnitte angebracht. Der erste Hohlwellenabschnitt befindet sich dabei auf einer ersten Seite des Stirnrads und der zweite Hohlwellenabschnitt auf einer zweiten Seite des Stirnrads. Der erste und zweite Hohlwellenabschnitt sind jeweils drehfest mit dem Stirnrad verbunden und an ihrem jeweiligen Ende drehbar gelagert. Dadurch bilden die Hohlwellenabschnitte und das Stirnrad eine drehbare Baugruppe in Differentialbauweise.

Dadurch können die Hohlwellenabschnitte und das Stirnrad jeweils aus unabhängig voneinander wählbaren Werkstoffen hergestellt werden. Dadurch kann beispielsweise das Stirnrad aus einem besonders harten oder verschleißbeständigen Werkstoff hergestellt werden während die Hohlwellenabschnitte aus einem besonders einfach zu verarbeitenden Werkstoff hergestellt werden. Um eine ausreichende Laufruhe der Hohlwelle mit dem eingebauten Stirnrad zu gewährleisten ist lediglich bei der Planarität der Kontaktflächen zwischen den Hohlwellenabschnitten und dem Stirnrad eine enge Toleranz einzuhalten. Eine aufwendig zu fertigenden Presspassung zwischen dem Stirnrad und der Hohlwelle wie in den Lösungen gemäß dem Stand der Technik ist entbehrlich. Darüber hinaus ist der axiale Aufbau der beiden Hohlwellenabschnitte mit dem dazwischenliegenden Stirnrad schnell und einfach zu montieren. Die Hohlwellen sind durch ihre reduzierten axialen Abmessungen einfacher herzustellen, da ein tiefes Eindringen von Werkzeug in die Hohlwelle nicht mehr notwendig ist. Auch die aufwendige Herstellung einer Kurzverzahnung an einer Innenseite der Hohlwelle, wie im Stand der Technik bekannt, wird so eingespart. Darüber hinaus erlaubt die erfindungsgemäße Lösung eine Herstellung der Abtriebswelle mit einem reduzierten Zerspanungsgrad. Insgesamt ist die Fertigung des erfindungsgemäßen Abtriebs erheblich einfacher herstellbar und wirtschaftlicher.

In einer besonders bevorzugten Ausführungsform der Erfindung sind die Hohlwellenabschnitte miteinander und mit dem Stirnrad über eine kraftschlüssige Verbindung lösbar miteinander verbunden. Die kraftschlüssige Verbindung kann dabei durch eine Haltekraft hergestellt werden, die entlang einer Axialrichtung des Abtriebs wirkt. Dadurch werden die Hohlwellenabschnitte und das Stirnrad in Axialrichtung aneinander gedrückt. Ein reiner Kraftschluss zwischen den Hohlwellenabschnitten und dem Stirnrad erlaubt es, eine maximale Kontaktfläche zwischen dem Stirnrad und den jeweiligen Enden der Hohlwellenabschnitte für einen flächigen Kontakt zu nutzen. Das Auftreten von Spannungskonzentrationen oder Kerbeffekte infolge von formschlüssigen Komponenten wird verhindert und so die Tragfähigkeit des vorhandenen Materials stärker ausgenutzt. Gegenüber den aus dem Stand der Technik bekannten Lösungen wird hierdurch eine als Schrumpfsitz ausgebildete Schnittstelle zwischen der Hohlwelle und dem Stirnrad eingespart. An derartige Schrumpfsitze besteht im Stand der Technik die Anforderung, zur vollständigen Übertragung des Drehmoments auf der Hohlwelle geeignet sein zu müssen. In der erfindungsgemäßen Lösung ist dieser entsprechend aufwendige Schrumpfsitz entbehrlich. Durch die Lösbarkeit der kraftschlüssigen Verbindung ist eine einfache Montage und Wartung des erfindungsgemäßen Abtriebs möglich. Die Lösbarkeit erlaubt insbesondere die Einsparung großer und aufwendiger Ersatzteile und erhöht damit die Kosteneffizienz der erfindungsgemäßen Lösung.

Besonders bevorzugt ist die lösbare kraftschlüssige Verbindung als Schraubverbindung ausgebildet, die mindestens einen Bolzen umfasst. Dabei erstreckt sich mindestens ein Bolzen durch das Stirnrad und stützt sich an einem Flansch am Ende des ersten oder zweiten Hohlwellenabschnitts ab. Die zugehörige Mutter stützt sich an einem Flansch des entsprechenden anderen Hohlwellenabschnitts ab. Alternativ kann der mindestens eine Bolzen auch in ein Innengewinde im Stirnrad eingedreht sein. Weiter alternativ kann einer der Hohlwellenabschnitte an seinem Ende eine Ausnehmung zur Aufnahme des Bolzens aufweisen, die mit einem Innengewinde versehen ist. Besonders bevorzugt ist der Hohlwellenabschnitt mit einer Ausnehmung mit Innengewinde versehen, der auf der dem Getriebe zugewandten Seite des Stirnrads montiert ist. Eine solche Ausnehmung mit Innengewinde erlaubt eine einfache Montage ohne zusätzliche Komponenten wie Unterlegscheiben oder Muttern. Insgesamt wird so eine besonders einfache, und dadurch sichere und schnelle Montage ermöglicht. Die Schraubverbindung erlaubt es, durch die Auswahl einer entsprechenden Anzahl an Bolzen die mechanische Tragfähigkeit der lösbaren kraftschlüssigen Verbindung zwischen den Hohlwellenabschnitten und dem Stirnrad einzustellen. Bolzen weisen ein hohes Maß an Zug-, Druck und Biegebelastbarkeit auf. Hierdurch wird auch beim Übertragen von besonders hohen Wellenleistungen, insbesondere von hohen Drehmomenten, eine hohe Belastbarkeit und Zuverlässigkeit der Hohlwelle gewährleistet. Zusätzlich sind Schraubverbindungen wirtschaftlich herstellbar, gut inspizierbar und die Bolzen leicht ersetzbar. Infolgedessen ist der erfindungsgemäße Abtrieb auch für Anwendungen geeignet, in denen hohe Anforderungen an die mechanische Belastbarkeit gestellt werden und der Montageraum gering ist, beispielsweise in Gondeln von Windkraftanlagen.

Des Weiteren kann das Stirnrad im erfindungsgemäßen Abtrieb unmittelbar mit der Abtriebswelle drehmomentübertragend verbunden sein. Die Drehmomentübertragung wird dabei vorzugsweise durch eine formschlüssige Kopplung zwischen der Abtriebswelle und dem Stirnrad gewährleistet. Das Stirnrad kann daher konstruktiv auf die einzuleitende Wellenleistung hin konstruiert werden. Die Hohlwellenabschnitte dienen dabei lediglich der drehbaren Lagerung des Stirnrads. Bei der Herstellung der Hohlwellenabschnitte kann auf einfach zu bearbeitende Werkstoffe zurückgegriffen werden. Der Einsatz hochleistungsfähiger Materialien kann somit kosteneffizient auf ein Minimum an Komponenten, also beispielsweise auf das Stirnrad, eingeschränkt werden. Es wird so eine höhere konstruktive Effizienz erzielt. Insgesamt werden die oben skizzierten Vorteile des erfindungsgemäßen Abtriebs in besonders hohem Maße erzielt.

In einer besonders bevorzugten Ausführungsform der Erfindung wird die drehmomentübertragende Verbindung zwischen dem Stirnrad und der Abtriebswelle durch eine geeignete Verzahnung erzielt. Dies umfasst eine Innenverzahnung, die in einer im Wesentlichen mittigen Ausnehmung im Stirnrad ausgebildet ist. Die Abtriebswelle ist an ihrem dem Getriebe abgewandten Ende mit einer korrespondierenden Außenverzahnung versehen. Die Innenverzahnung erstreckt sich vorzugsweise über die in Innenbereich des Stirnrads vorhandene Breite, so dass eine maximale Abwälzfläche zur Drehmomentübertragung bereitsteht. Dadurch wird eine maximale Ausnutzung des Materials des Stirnrads ermöglicht. Eine solche Verzahnung ist vorzugsweise als Kurzverzahnung ausgebildet, die ein hohes Maß an Festigkeit bei einfacher Fertigung bietet. Unter einer Kurzverzahnung ist dabei eine Verzahnung im Sinne der Norm DIN 5480 zu verstehen.

Darüber hinaus können die Hohlwelle zumindest im Bereich der Außenverzahnung und/oder das Stirnrad zumindest im Bereich der Innenverzahnung aus einem gehärteten Stahl herstellt sein. Eine lokale Härtung im Bereich der Außenverzahnung oder Innenverzahnung kann hierbei beispielsweise durch Induktionshärten, Carbonitrieren, Nitrierhärten, Umwandlungshärten, Einsatzhärten oder Ausscheidungshärten hergestellt werden. Besonders bevorzugt sind die Werkstoffe, aus denen die Außenverzahnung und Innenverzahnung hergestellt sind, als verschleißarme Materialpaarung gewählt. Eine bevorzugte Materialpaarung ist hierbei die Stahllegierung 18CrNiMo7-6 für das Stirnrad mit der Stahllegierung 235JR für die Hohlwelle.

Besonders bevorzugt ist das Getriebe als Planetengetriebe ausgebildet. Im erfindungsgemäßen Abtrieb kann die Abtriebswelle mit einer beweglichen Komponente des Planetengetriebes gekoppelt sein, also je nach Bauform des Planetengetriebes, mit dem Hohlrad, dem Planetenträger oder dem Sonnenrad. In einer bevorzugten Ausführungsform der Erfindung ist die Abtriebswelle mit dem Sonnenrad des Planetengetriebes verbunden.
Ferner kann im beanspruchten Abtrieb der zweite Hohlwellenabschnitt einen Vorsprung aufweisen, der zu einem axialen Abstützen der Abtriebswelle ausgebildet ist. Dazu ist der Vorsprung vorzugsweise an der Innenseite des zweiten Hohlwellenabschnitts umlaufend oder unterbrochen ausgebildet. Der Vorsprung weist eine im Wesentlichen radiale Form auf und verhindert ein Durchrutschen der Außenverzahnung der Abtriebswelle in den zweiten Hohlwellenabschnitt. Eine Montage des erfindungsgemäßen Abtriebs, bei der die Abtriebswelle nicht in die Innenverzahnung des Stirnrades eingreift, wird so verhindert. In einer besonders bevorzugten Ausführungsform ist der Vorsprung gehärtet ausgebildet, so dass auch ein dauerhaftes Abstützen der Abtriebswelle nur zu verringertem Verschleiß am Vorsprung führt.

In einer bevorzugten Ausführungsform der Erfindung ist die Hohlwelle im ersten und/oder zweiten Hohlwellenabschnitt im Bereich des Stirnrads im Wesentlichen zylindrisch ausgebildet. Darunter ist eine prismatische runde Form im Bereich der mechanischen Anschlüsse zum Stirnrad zu verstehen. Die Hohlwellenabschnitte sind in diesen Bereichen also nicht konisch ausgebildet. Der erfindungsgemäße Abtrieb erlaubt es, konstruktiv auf konische Formen zur Kopplung mit dem Stirnrad zu verzichten. Eine weitestgehend durchgehend prismatische, also nichtkonische, Form der Hohlwellenabschnitte erlaubt eine deutlich einfachere und schnellere Fertigung als bei konischen Wellen. Die erfindungsgemäße Lösung ist dadurch insgesamt kosteneffizient.

Ferner kann im erfindungsgemäßen Abtrieb die lösbare kraftschlüssige Verbindung zur Aufnahme einer Axialkraft und/oder Radialkraft ausgebildet sein. Die entsprechende Axialkraft und/oder Radialkraft ist über das Stirnrad oder den Vorsprung im zweiten Hohlwellenabschnitt in die lösbare kraftschlüssige Verbindung einleitbar. Die Axialkräfte und Radialkräfte, die am Stirnrad eingeleitet werden, werden durch einwirkende Kippmomente bzw. Biegemomente hervorgerufen. Mechanische Einwirkungen, die von einer angeschlossenen Anwendung, beispielsweise einem Generator, auf das Getriebe einwirken, werden so zuverlässig absorbiert. Gleichermaßen werden axiale Belastungen, die zu einem Anschlagen der Abtriebswelle an den Vorsprüngen führen könnten, zuverlässig absorbiert ohne dass die Funktionstüchtigkeit des Getriebes beeinflusst wird. Insbesondere werden diese mechanischen Beanspruchungen in den mindestens einen Bolzen eingeleitet, der die Hohlwellenabschnitte und das Stirnrad verbindet. Bolzen sind in einer Vielzahl an Größen, Qualitäten und Werkstoffen verfügbar und können einfach an die zu erwartenden mechanischen Beanspruchungen im Abtrieb angepasst werden. Ermüdungserscheinungen treten im erfindungsgemäßen Abtrieb vorrangig im Bolzen auf, so dass über die einfache Inspizierbarkeit der Bolzen einem Ermüdungsversagen zuverlässig vorgebeugt werden kann. Hierdurch wird die Betriebssicherheit des angeschlossenen Getriebes gesteigert.

In einer besonders bevorzugten Ausführungsform der Erfindung ist das Stirnrad einteilig oder mehrteilig ausgebildet. Ein einteiliges Stirnrad kann in einfacher Weise in wenigen Fertigungsschritten hergestellt werden und bietet ein hohes Maß an Wirtschaftlichkeit. Bei einem mehrteiligen Stirnrad, das beispielsweise in Radialrichtung aus mehreren Einzelteilen aufgebaut ist, kann die Materialwahl für jedes Einzelteil optimiert werden. Beispielsweise kann der radial innere oder äußere Teil aus einem gehärteten Stahl oder Gussstahl hergestellt werden, der besonders verschleißbeständig ist. Ein radial dazwischenliegendes Einzelteil wiederum kann aus einem gut schweißbaren oder aufschrumpfbaren Material hergestellt werden. Ebenso können ein radial innerer Teil aus einem Gussstahl und ein radial äußerer Teil, eine sogenannte Bandage, aus einem Stahl hergestellt sein. Insgesamt wird durch eine Mehrteiligkeit des Stirnrads das Prinzip des Leichtbaus konsequent umgesetzt.

Die oben skizzierte Aufgabenstellung wird auch durch ein erfindungsgemäßes Planetengetriebe gelöst. Das Planetengetriebe umfasst ein Hohlrad und einen Planetenträger, auf dem mindestens ein Planetenrad aufgenommen ist. Das Hohlrad und der Planetenträger mit dem mindestens einen Planetenrad wirken mit einem Sonnenrad zusammen. Zum erfindungsgemäßen Planetengetriebe gehört auch eine Abtriebswelle, die mechanisch mit dem Hohlrad, dem Planetenträger oder dem Sonnenrad verbunden ist. Über die Abtriebswelle wird die vom Planetengetriebe abgegebene Wellenleistung an eine Anwendung, beispielsweise einen Generator, weitergeführt. Die Abtriebswelle ist dazu mit einem Abtrieb gekoppelt, der gemäß mindestens einer der oben beschriebenen Ausführungsformen ausgebildet ist. Durch den erfindungsgemäßen Abtrieb ist das beanspruchte Planetengetriebe einfacher und wirtschaftlicher herstellbar und wartungsfreundlicher.

Gleichermaßen wird die zugrundeliegende Aufgabenstellung durch eine Windkraftanlage gelöst, die eine Gondel mit einem Generator aufweist, dessen Eingangswelle über ein Getriebe angetrieben wird. Das Getriebe ist dabei gemäß einer der zuvor skizzierten Ausführungsformen ausgebildet. Die mit dem beanspruchten Getriebe erzielten technischen Vorteile einer vereinfachten Herstellung kommen bei einer Windkraftanlage besonders zum Tragen. Vor allem die verbesserte Inspizierbarkeit durch den vereinfachten Montage- und Demontagevorgang des Abtriebs am Getriebe erleichtert die Wartung einer Windkraftanlage in besonderem Maße. Hierdurch wird die Wirtschaftlichkeit der Windkraftanlage erheblich gesteigert.

Die Erfindung wird in den Figuren anhand einzelner Ausführungsformen beschrieben. Es zeigt im Einzelnen:
- FIG 1: einen Längsschnitt durch eine Planetengetriebe mit einem Abtrieb gemäß dem Stand der Technik;
- FIG 2: einen Längsschnitt an einem Stirnrad und einer Hohlwelle in einem erfindungsgemäßen Abtrieb;
- FIG 3: eine geschnittene Schrägansicht einer Gondel einer erfindungsgemäßen Windkraftanlage.

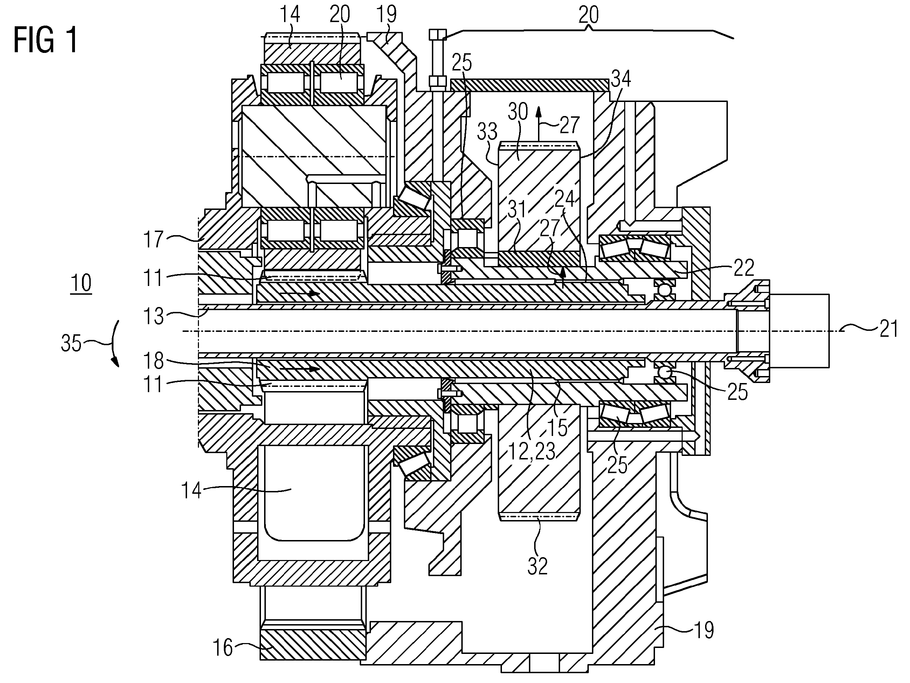

In FIG 1 ist schematisch ein Längsschnitt eines bekannten Planetengetriebes 10 mit einem Abtrieb 20 gemäß dem Stand der Technik abgebildet. Das Planetengetriebe 20 umfasst ein Hohlrad 16, in dem Planetenräder 14 laufen, die über Wälzlager 25 drehbar in einem Planetenträger 17 aufgenommen sind. Der Planetenträger 17 ist über Wälzlager 25, die am Gehäuse 19 des Planetengetriebes 10 befestigt sind, drehbar. Die Planetenräder 14 wirken mit einer Pitchwelle 13 zusammen, die mit einer Sonnenradwelle 23 verbunden ist. Über eine angeformte Sonnenverzahnung 11 bildet die Sonnenradwelle 23 integral auch ein Sonnenrad 18 des Planetengetriebes 10 aus. Die Sonnenradwelle 23 nimmt die über das Planetengetriebe 10 transportierte Wellenleistung 35 auf und transportiert sie zu einem Abtrieb 20. Die Sonnenradwelle 23 dient damit als Abtriebswelle 12.

Die Abtriebswelle 12 ist einer Außenverzahnung 15 versehen, die als Kurzverzahnung ausgebildet ist und mit einer Hohlwelle 22 zusammenwirkt, die um die koaxial um die gleiche Drehachse 21 drehbar gelagert ist wie die Abtriebswelle 12 selbst. Die Hohlwelle 22 ist an beiden Enden in Wälzlagern 25 drehbar aufgenommen und an seiner Innenseite mit einer Innenverzahnung 24 versehen, die in die Außenverzahnung 15 der Abtriebswelle 12 eingreift. Durch die ineinandergreifende Außenverzahnung 15 und die Innenverzahnung 24 erfolgt eine Drehmomentübertragung 27 von der Abtriebswelle 12 auf die Hohlwelle 22. An der Außenseite der Hohlwelle 22 ist über eine Passfeder 31 ein Stirnrad 30 befestigt. Durch die Passfeder 31 wird eine drehfeste Verbindung zwischen dem Stirnrad 30 und der Hohlwelle 22 hergestellt. Das Stirnrad 30 weist eine dem Planetengetriebe 10 zugewandte erste Seite 33 und eine dem Planetengetriebe abgewandte zweite Seite 34 auf. Das Stirnrad 30 weist ferner an seinem Umfang eine Laufverzahnung 32 auf, über die eine Drehmomentübertragung 27 zu einer nicht näher dargestellten Anwendung erfolgt. Die Drehmomentübertragung 27 korrespondiert dabei mit der Wellenleistung 35, die über die Abtriebswelle 12 übertragen wird.

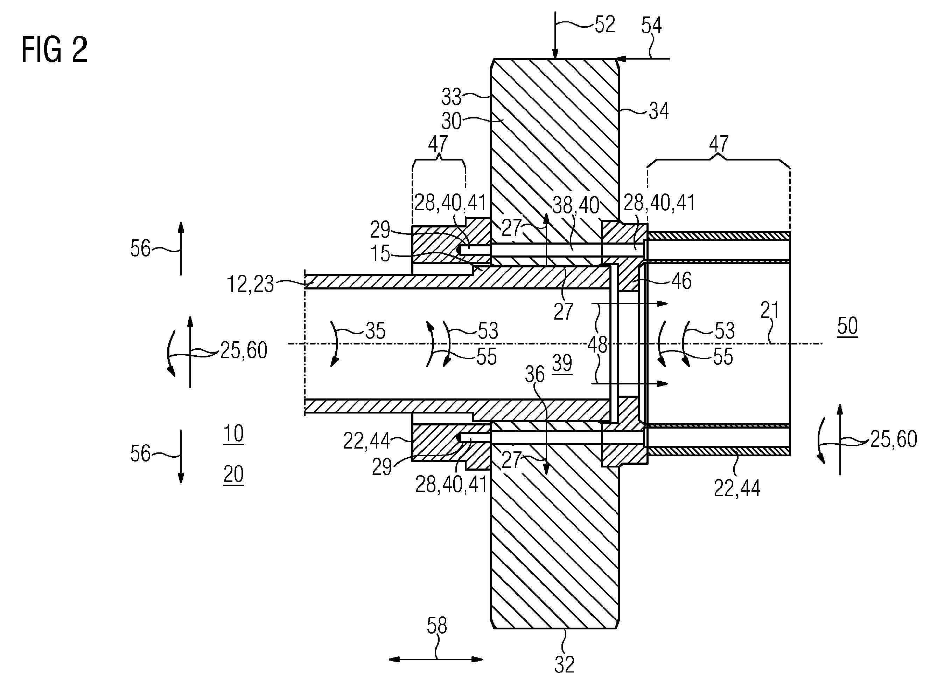

In FIG 2 ist ein Längsschnitt im Bereich eines Stirnrads 30 dargestellt, das zu einer Ausführungsform des erfindungsgemäßen Abtriebs 20 gehört, der mit einem nicht näher dargestellten Planetengetriebe 10 gekoppelt ist. Zum Abtrieb 20 gehört eine Sonnenradwelle 23, die als Abtriebswelle 12 dient. An der Abtriebswelle 12 ist an deren Ende eine Außenverzahnung 15 in Form einer Kurzverzahnung ausgebildet. Die Abtriebswelle 12 ist zumindest teilweise in einem ersten Hohlwellenabschnitt 42 einer Hohlwelle 22 drehbar aufgenommen. Die Außenverzahnung 15 greift in eine Innenverzahnung 36 ein, die in einer im Wesentlichen zentrischen Ausnehmung 39 im Stirnrad 30 ausgebildet ist. Hierdurch wird die über die Abtriebswelle 12 transportierte Wellenleistung 35 in das Stirnrad 30 unmittelbar eingeleitet, also eine unmittelbare Drehmomentübertragung 27 verwirklicht. Die Außenverzahnung 15 der Abtriebswelle 12 und die Innenverzahnung 36 des Stirnrads 30 sind aus einem gehärteten Stahl hergestellt, der ein hohes Maß an Festigkeit und Verschleißbeständigkeit bietet. Ferner steht das Stirnrad 30 auf seinen beiden Seiten 33, 34 jeweils in Kontakt mit dem ersten Hohlwellenabschnitt 42 und dem zweiten Hohlwellenabschnitt 44. Beide separate Hohlwellenabschnitte 42, 44 bilden unter Einbeziehung des Stirnrads 30 die Hohlwelle 22. Die Hohlwellenabschnitte 42, 44, das Stirnrad 30 und die Abtriebswelle 12 sind dabei im Wesentlichen koaxial zu einer gemeinsamen Drehachse 21 drehbar gelagert. Die Hohlwellenabschnitte 42, 44 sind in einem radial äußeren Bereich mit axialen Ausnehmungen 28, 38 versehen. Der Begriff "radial" bezieht sich dabei auf die Drehachse 21, wobei die radial äußere Richtung in FIG 2 durch Pfeile mit dem Bezugszeichen 56 abgebildet ist. Die Axialrichtung ist durch den Doppelpfeil 58 abgebildet. Die axialen Ausnehmungen 28, 38 in den Hohlwellenabschnitten 42, 44 und im Stirnrad 30 sind miteinander fluchtend positioniert und damit zur Aufnahme eines Befestigungsmittels 41 geeignet. Ein geeignetes Befestigungsmittel 41 ist dabei ein Bolzen, der in ein Gewinde 29 im ersten Hohlwellenabschnitt 42 einschraubbar ist. Die Ausnehmungen 28, 38 und die Befestigungsmittel 41 bilden insgesamt eine lösbare kraftschlüssige Verbindung 40 aus, die die Hohlwellenabschnitte 42, 44 und das Stirnrad 30 drehfest miteinander verbindet. Die Hohlwellenabschnitte 42, 44 wiederum sind drehbar in nicht näher gezeigten Wälzlagern 25 drehbar gelagert. Infolge der unmittelbaren Drehmomentübertragung 27 sind die an den Wälzlagern 25 eintretenden Lagerreaktionskräfte und -momente 60 reduziert.

Ferner weist der zweite Hohlwellenabschnitt 44 an seiner Innenseite mit einen umlaufenden Vorsprung 46 aus, der dazu ausgebildet ist, die Abtriebswelle 12 abzustützen. Der Vorsprung 46 verhindert bei einem Montagevorgang des Abtriebs 20 ein Durchrutschen der Abtriebswelle 12 durch das Stirnrad 30, so dass keine Drehmomentübertragung 27 über die Außen- und Innenverzahnung 15, 24 mehr vorliegt. Der Vorsprung 46 selbst ist gehärtet und dadurch in der Lage, auch dauerhaft Axialkräften 48 standzuhalten, die bei einem Kontakt mit der Abtriebswelle 12 auf den Vorsprung 46 einwirken.

Die Befestigungsmittel 41 der lösbaren kraftschlüssigen Verbindung 40 sind ferner dazu ausgebildet, die Axialkräfte 48, die über die Abtriebswelle 12 in die Hohlwelle 22 eingeleitet werden, in Form mechanischer Beanspruchungen 50 aufzunehmen. Durch ein Andrücken der Abtriebwelle 12 an den Vorsprung 46 resultieren die vorliegenden Axialkräfte 48 in einer Zugbeanspruchung der Befestigungsmittel 41. Eine Radialkraft 52, die am Stirnrad 30 im Bereich von dessen Laufverzahnung 32 angreift, wird von den Befestigungsmitteln 41 in Form einer Scherbeanspruchung und einer Biegebeanspruchung aufgenommen. Die Biegebeanspruchung in den Befestigungsmitteln 41 entspricht dabei dem durch die Radialkraft 52 hervorgerufenen Biegemoment 53. Eine Axialkraft 54, die am Stirnrad 54 in einem radial äußeren Bereich angreift, ruft ein Kippmoment 55 hervor, das auch von den Befestigungselementen 41 aufgenommen wird. Darüber hinaus sind der erste und zweite Hohlwellenabschnitt 42, 44 jeweils in einem dem Stirnrad 30 zugewandten Bereich 47 zylindrisch ausgebildet. Unter der Zylinderform ist dabei zu verstehen, dass die Hohlwellenabschnitte 42, 44 nicht konisch sind. Folglich sind die Hohlwellenabschnitte 42, 44 einfach zu fertigen.

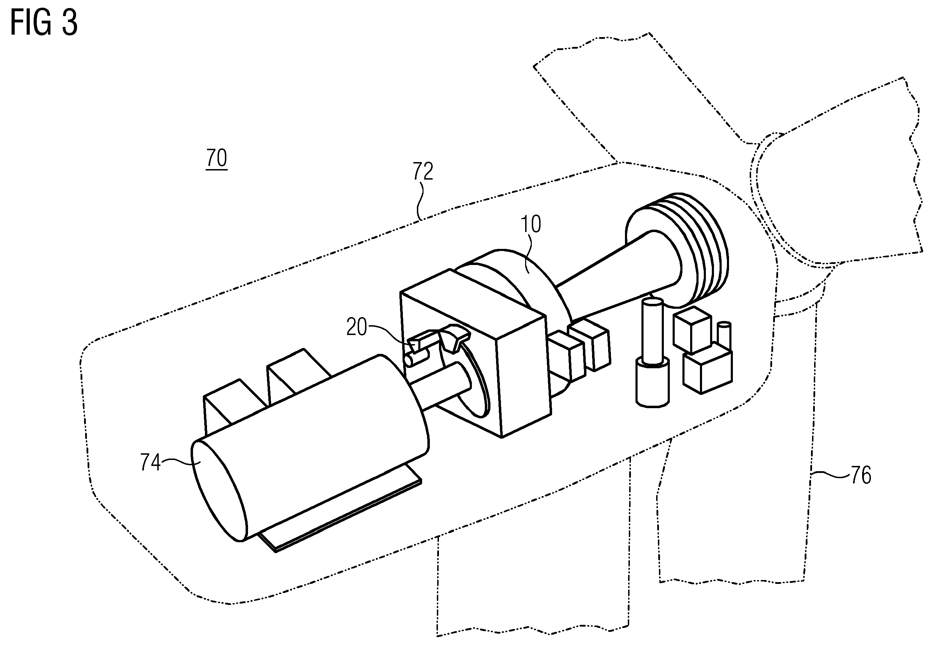

Die FIG 3 zeigt eine geschnittene Schrägansicht einer Gondel 72, die zu einer erfindungsgemäßen Windkraftanlage 70 gehört. Ein Rotor 76, der an einem luvseitigen Ende der Gondel 72 angebracht ist, ist zur Elektrizitätserzeugung mechanisch mit einem Getriebe 10 gekoppelt, das wiederum mit einem Generator 74 verbunden ist. Die mechanische Kopplung zwischen dem Getriebe 10 und dem Generator 74 erfolgt über einen Abtrieb 20. Das Getriebe 10 ist als Planetengetriebe 10 ausgebildet und der Abtrieb 20 ist gemäß einer der skizzierten erfindungsgemäßen Ausführungsformen ausgebildet.

## Patentansprüche

1. Abtrieb (20) für ein Getriebe (10), umfassend eine Abtriebswelle (12) des Getriebes (10), die zumindest teilweise in einer Hohlwelle (22) aufgenommen ist, und die Hohlwelle (22) drehfest mit einem Stirnrad (30) verbunden ist, **dadurch gekennzeichnet, dass** das die Hohlwelle (22) einen ersten und einen separaten zweiten Hohlwellenabschnitt (42, 44) umfasst, die auf jeweils unterschiedlichen Seiten (33, 34) des Stirnrads (30) angeordnet sind.

2. Abtrieb (20) nach Anspruch 1, **dadurch gekennzeichnet, dass** die Hohlwellenabschnitte (42, 44) miteinander und dem Stirnrad (30) über eine lösbare kraftschlüssige Verbindung (40) verbunden sind.

3. Abtrieb (20) nach Anspruch 1 oder 2, **dadurch gekennzeichnet, dass** die lösbare kraftschlüssige Verbindung (40) als Schraubverbindung mit mindestens einem Bolzen (41) ausgebildet ist.

4. Abtrieb (20) nach einem der Ansprüche 1 bis 3, **dadurch gekennzeichnet, dass** das Stirnrad (30) unmittelbar mit der Abtriebswelle (12) drehmomentübertragend verbunden ist.

5. Abtrieb (20) nach Anspruch 4, **dadurch gekennzeichnet, dass** das Stirnrad (30) mit einer Innenverzahnung (36) und die Abtriebswelle (12) mit einer korrespondierenden Außenverzahnung (15) versehen ist.

6. Abtrieb (20) nach Anspruch 5, **dadurch gekennzeichnet, dass** das Stirnrad (30) und/oder die Abtriebswelle (12) zumindest im Bereich der Innenverzahnung (36) bzw. der Außenverzahnung (15) aus einem gehärteten Stahl hergestellt sind.

7. Abtrieb (20) nach einem der Ansprüche 1 bis 6, **dadurch gekennzeichnet, dass** die Abtriebswelle (12) als Sonnenradwelle (23) eines Planetengetriebes (10) ausgebildet ist.

8. Abtrieb (20) nach einem der Ansprüche 1 bis 7, **dadurch gekennzeichnet, dass** der zweite Hohlwellenabschnitt (44) an einem dem Stirnrad (30) zugewandten Ende (45) einen Vorsprung (46) zum Abstützen der Abtriebswelle () aufweist.

9. Abtrieb (20) nach Anspruch 8, **dadurch gekennzeichnet, dass** der Vorsprung (46) gehärtet ausgebildet ist.

10. Abtrieb (20) nach einem der Ansprüche 1 bis 9, **dadurch gekennzeichnet, dass** die die Hohlwelle (22) im Bereich des Stirnrads (30) *im Wesentlichen* zylindrisch ausgebildet ist.

11. Abtrieb (20) nach einem der Ansprüche 1 bis 10, **dadurch gekennzeichnet, dass** die lösbare kraftschlüssige Verbindung (40) zur Aufnahme einer über das Stirnrad und/oder den Vorsprung (46) eingeleiteten Axialkraft (48, 54) und/oder Radialkraft (52) ausgebildet ist.

12. Abtrieb (20) nach einem der Ansprüche 1 bis 11, **dadurch gekennzeichnet, dass** das Stirnrad (30) einteilig oder mehrteilig ausgebildet ist.

13. Planetengetriebe (10), umfassend ein Hohlrad (16), einen Planetenträger (17) mit mindestens einem Planetenrad (14), ein Sonnenrad (18) und eine Abtriebswelle (12), **dadurch gekennzeichnet, dass** die Abtriebswelle (12) mit einem Abtrieb (20) gemäß einem der Ansprüche 1 bis 12 gekoppelt ist.

14. Windkraftanlage, umfassend eine Gondel mit einem Generator, der mittels eines Planetengetriebes (10) angetrieben ist, **dadurch gekennzeichnet, dass** das Planetengetriebe (10) nach Anspruch 13 ausgebildet ist.
